# EUROPÄISCHE PATENTSCHRIFT

(11) **EP 1 664 494 B1**
(45) Veröffentlichungstag und Bekanntmachung des Hinweises auf die Patenterteilung: **21.03.2007**
(21) Anmeldenummer: 04762461.4
(22) Anmeldetag: 22.07.2004
(51) Int. Cl.: F01N 3/021, F02D 41/14, F01N 3/022, F01N 3/027

(54) **ABGASREINIGUNGSVORRICHTUNG FÜR BRENNKRAFTMASCHINEN UND VERFAHREN ZU IHREM BETRIEB**
EXHAUST GAS PURIFICATION DEVICE FOR INTERNAL COMBUSTION ENGINES AND METHOD FOR OPERATING THE SAME
DISPOSITIF D'EPURATION DES GAZ D'ECHAPPEMENT POUR MOTEURS A COMBUSTION INTERNE ET PROCEDE DE FONCTIONNEMENT ASSOCIE

(30) Priorität: 11.09.2003 DE 10341949
(43) Veröffentlichungstag der Anmeldung: 07.06.2006
(73) Patentinhaber: ROBERT BOSCH GMBH, 70442 Stuttgart (DE)
(72) Erfinder: WIRTH, Ralf, 71229 Leonberg (DE); SAMUELSEN, Dirk, 71636 Ludwigsburg (DE); MUELLER, Klaus, 71732 Tamm (DE); BECKER, Carsten, 71394 Kernen I.R. (DE)
(86) Internationale Anmeldenummer: PCT/DE2004/001611
(87) Internationale Veröffentlichungsnummer: WO 2005/026507

(56) Entgegenhaltungen:
- EP-A- 0 480 396
- WO-A-02/29218
- US-A- 4 331 454
- US-A- 4 719 751

## Beschreibung

Die Erfindung betrifft eine Abgasreinigungsvorrichtung für Brennkraftmaschinen und ein Verfahren zu ihrem Betrieb. Darüber hinaus betrifft die Erfindung ein Computerprogramm zur Durchführung dieses Verfahrens.

### Stand der Technik

Im Stand der Technik sind Abgasreinigungsvorrichtungen, insbesondere für Dieselkraftmaschinen grundsätzlich bekannt. Sie sind im Abgasstrom von Dieselkraftmaschinen angeordnet und umfassen typischerweise einen Diesel-Oxidationskatalysator und einen diesem nachgeschalteten Rußpartikelfilter. Es sind verschiedene Arten von Rußpartikeln bekannt. Serienmäßig eingesetzt werden bei Dieselfahrzeugen üblicherweise sogenannte keramische Wabenfilter mit einer monolithischen Struktur. Darüber hinaus sind jedoch auch Taschenfilter bekannt, welche einen gänzlich anderen Aufbau haben als die Waben filter. Die Filter enthalten keine Kapillaren, sondern Filtertaschen, vorzugsweise aus Sintermetall, durch deren Oberfläche das Abgas hindurchströmt. Beim Durchströmen lagern sich die im Abgas befindlichen Partikel bevorzugt auf den Oberflächen der Taschenfilter ab.

Allen Rußpartikelfiltern ist gemeinsam, dass sich in ihrem Inneren Rußpartikel ansammeln, die während des Betriebs der Dieselkraftmaschine aus deren Abgas herausgefiltert werden. Bei allzu langem Betrieb der Dieselkraftmaschine würde sich deshalb im Inneren der Rußpartikelfilter eine zu große Rußmasse ansammeln, welche auf die Dauer zu einer Verstopfung des Abgasweges und infolgedessen zu einem Ausfall der Dieselkraftmaschine führen würde, wenn die angesammelte Rußmasse nicht von Zeit zu Zeit entfernt werden würde.

Die periodische Entfernung der angesammelten Rußmasse erfolgt üblicherweise so, dass der Rußpartikelfilter in einen sogenannten Regenerationsbetriebszustand gefahren wird. In diesem Zustand wird der Rußpartikelfilter regelmäßig dann gefahren, wenn die Dieselkraftmaschine eine vorbestimmte Laufleistung, zum Beispiel alle 1.000 km, erbracht hat oder wenn sich eine bestimmte Rußmasse im Inneren des Rußpartikelfilters angesammelt hat. In diesen Regenerationsbetriebszustand wird der Rußpartikelfilter dann während eines normalen Betriebs der Dieselkraftmaschine dadurch überführt, dass seine Betriebstemperatur durch geeignete motorische Maßnahmen auf ca. 600 ° Celsius erhöht wird. Geeignete motorische Maßnahmen sind solche, welche eine zumindest temporäre Erhöhung der Temperatur des Abgases auf den genannten Temperaturwert bewirken. Dies kann zum Beispiel durch eine Reduzierung der Frischluft oder durch eine Verbrennung von Kraftstoff im vorgeschalteten Katalysator erzielt werden. Beide Maßnahmen führen zu der gewünschten Erhöhung der Temperatur des Abgases, welches den Rußpartikelfilter durchströmt und bewirken damit auch die gewünschte Erhöhung von dessen Betriebstemperatur. Bei dieser erhöhten Betriebstemperatur im Regenerationsbetrieb findet ein Abbrand des in dem Rußpartikelfilter angesammelten Rußes statt. Dieser Abbrand verläuft exotherm und führt deshalb zu einer weiteren ausgeprägten Temperaturerhöhung über die beispielhaft genannten 600 ° C hinaus. Durch die Regeneration wird die angesammelte Rußmasse im Inneren des Rußpartikelfilters abgebaut, indem der Ruß im Wesentlichen in Kohlendioxid umgewandelt wird; der Rußpartikelfilter wird auf diese Weise wieder besser durchströmbar und erreicht dadurch nahezu seinen Ausgangszustand.
Erkenntnisse über das Verhalten der Temperatur im Inneren des Rußpartikelfilter während eines soeben beschriebenen Regenerationsvorganges erlauben Informationen über die während der Regeneration verbrannte und damit abgebaute Rußmasse und über die Geschwindigkeit, mit welcher der Rußabbrand erfolgt, das heißt über die sogenannt Abbrandrate.

Bei dem bisher serienmäßig verwendeten Wabenfiltern ist eine genaue Erfassung der Temperatur im Inneren dieser Partikelfilter nicht möglich, weil der seitliche Einbau eines Temperatursensors in das Innere dieser Partikelfilter senkrecht zur Durchströmungsrichtung eine Zerstörung von deren Filterfunktion haben würde; genauer gesagt würde die kapillare Wabenstruktur durch den Einbau des Temperatursensors zerstört werden und das Abgas würde dann zumindest teilweise ungefiltert aus der Wabenstruktur austreten und in die Umgebung gelangen. Aus diesem Grund wurde bisher lediglich die Temperatur des Abgases am Ausgang des Partikelfilters und eventuell auch noch am Eingang des Partikelfilters gemessen, um durch Auswerten der so erfassten Temperaturwerte auf den tatsächlichen Temperaturverlauf im Inneren des Rußpartikelfilters rückschließen zu können. Die beschriebene Vorgehensweise liefert jedoch nur eine ungenaue Schätzung dieser gesuchten Temperatur und demzufolge sind auch nur ungenaue, oben angedeutete Berechnungsergebnisse über den Abbau der Rußmasse während der Regeneration möglich.

Ausgehend von diesem Stand der Technik ist es die Aufgabe der Erfindung, eine bekannte Abgasreinigungsvorrichtung, ein Verfahren zu deren Betrieb und ein entsprechendes Computerprogramm derart weiterzubilden, dass eine genauere Erfassung der Temperatur des Abgases im Inneren eines Rußpartikelfilters, insbesondere während des Regenerationsbetriebs, möglich wird.

Diese Aufgabe wird durch den Gegenstand des Patentanspruchs 1 gelöst.

### Vorteile der Erfindung

Rußpartikel können sowohl im Abgas einer Dieselkraftmaschine wie auch eines Ottomotors enthalten sein. Die Erfindung ist deshalb nicht auf Abgasreinigungsvorrichtungen für Dieselkraftmaschinen beschränkt.

Das Vorsehen des Temperatursensors im Inneren des Rußpartikelfilters ermöglicht die gewünschte genauere Erfassung der Temperatur, insbesondere während der Rußpartikelfilter in einem Regenerationsbetriebszustand betrieben wird. Die daraus resultierenden genaueren Erkenntnisse über den Temperaturverlauf im Filter während der Regeneration erlauben einen exakteren Rückschluss über den Beginn und das Ende der Regeneration beziehungsweise des vollständigen Abbaus der Rußmasse. Gleichzeitig ermöglichen diese genaueren Temperaturwerte eine genauere Aussage über den zeitlichen Verlauf des Abbaus der Rußmasse, das heißt zum einen eine genauere Aussage über die zu einem bestimmten Zeitpunkt während der Regeneration noch in dem Rußpartikelfilter befindlichen Rußmasse oder über die aktuelle Abbrandrate, das heißt die Geschwindigkeit, mit welcher der Ruß zu einem bestimmten Zeitpunkt abgebaut wird.

Besonders gut geeignet zum Einbau eines Temperatursensors in ihrem Inneren sind sogenannte Taschenfilter. Dabei handelt es sich um Rußpartikelfilter, welche in ihrem Inneren eine Vielzahl von Filtertaschen aufweisen, durch welche das Abgas hindurchströmen muss, damit sich die in ihm enthaltenen Rußpartikel auf den Oberflächen dieser Filtertaschen ablagern. Im Unterschied zu den bekannten Wabenfiltern kann ein Temperatursensor in diese Taschenfilter eingebracht werden, ohne dass die eigentliche Filterstruktur, das heißt insbesondere die Filtertaschen zerstört werden müssten und ohne dass deshalb die Filterwirkung eingeschränkt werden würde. So kann der Temperatursensor bei diesen Taschenfiltern in der Umgebung der Taschen, im Kontakt mit den Oberflächen der Taschen oder im Inneren der Taschen angeordnet sein. Der reale Volumenstrom durch die Filtertaschen kann aufgrund der Temperaturerfassung im Filter exakter erfasst werden, wodurch eine Verbesserung der Korrelation Rußmasse - Druckverlust erzielt wird.

Vorteilhafterweise erlaubt die genauere Ermittlung von insbesondere der während einer Regeneration im Inneren des Rußpartikelfilters auftretenden Temperatur eine genauere Berechnung beziehungsweise Vorhersage eines zukünftigen Zeitpunktes, wann der Rußpartikelfilter voraussichtlich wieder regeneriert, das heißt von angesammeltem Ruß befreit werden muss.

Außerdem ist es vorteilhaft, wenn aus der Erkenntnis über das genaue Temperaturverhalten im Inneren des Rußpartikelfilters eine Fehlermeldung generiert werden kann, wenn die Temperatur im Inneren des Rußpartikelfilters einen vorgegebenen zweiten oberen Schwellenwert übersteigt, weil dann eine Zerstörung des Rußpartikelfilters droht. Auf diese Weise kann die Lebensdauer und Haltbarkeit der so betriebenen Rußpartikelfilter sichergestellt oder zumindest verbessert werden. Ferner kann der Kraftstoffverbrauch eines Fahrzeugs mit einem derartigen Partikelfilter reduziert werden, weil Beladungsintervalle gegebenenfalls verlängert werden können und damit seltener in den mehrverbrauchsverursachenden Regenerationsbetrieb geschaltet werden muss.

Die oben genannte Aufgabe wird weiterhin durch ein Verfahren zum Betreiben einer Abgasreinigungsvorrichtung mit einem Rußpartikelfilter und ein Computerprogramm zum Durchführen dieses Verfahrens gelöst. Die Vorteile dieser Lösungen entsprechen im Wesentlichen den oben mit Bezugnahme auf die beanspruchte Abgasreinigungsvorrichtung genannten Vorteilen.

Weitere Ausgestaltungen der Vorrichtung und des Verfahrens sind Gegenstand der abhängigen Ansprüche.

### Zeichnungen

Der Beschreibung sind insgesamt drei Figuren beigefügt, wobei
- Figur 1: den Aufbau einer Abgasreinigungsvorrichtung gemäß der Erfindung;
- Figur 2: den Aufbau eines Rußpartikelfilters, insbesondere eines Sintermetallfilters gemäß der Erfindung; und
- Figur 3: ein Verfahren zum Betreiben einer Abgasreinigungsvorrichtung und insbesondere eines Rußpartikelfilters in einem Regenerationsbetriebszustand
zeigt.

### Beschreibung der Ausführungsbeispiele

Die Erfindung wird nachfolgend unter Bezugnahme auf diese drei Figuren detailliert beschrieben.

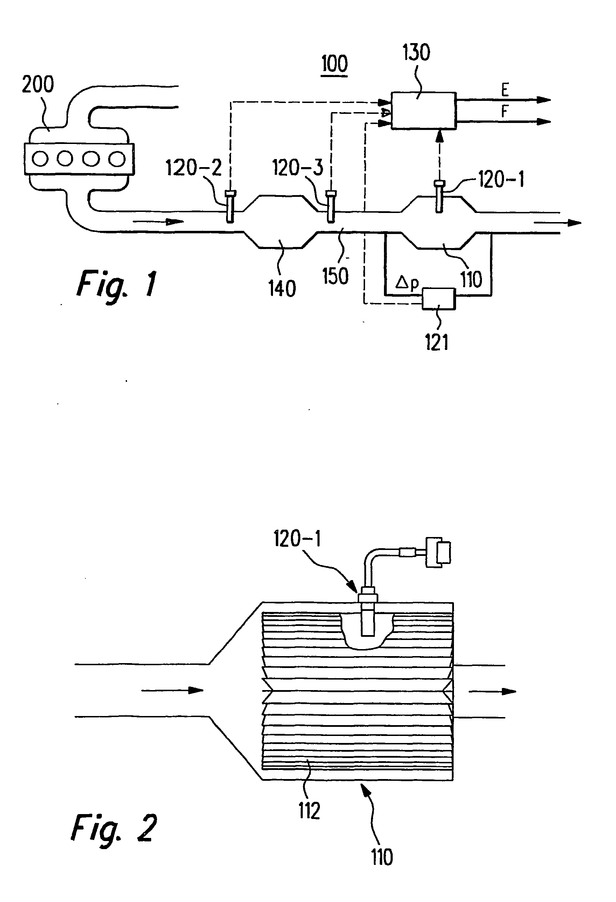

Figur 1 zeigt den Aufbau einer Abgasreinigungsvorrichtung 100 für Dieselkraftmaschinen 200 gemäß der Erfindung. Sie beinhaltet einen Rußpartikelfilter 110 zum Herausfiltern von Rußpartikeln aus dem Abgas der Dieselkraftmaschine 200 während des Betriebs. Im Inneren des Rußpartikelfilters 110 ist ein Temperatursensor 120-1 angeordnet zum Erfassen der Temperatur im Inneren des Rußpartikelfilters. Die von diesem Temperatursensor 120-1 erfassten Temperaturwerte werden einer Auswerteeinrichtung 130 zugeführt.

Der Rußpartikelfilter 110 ist vorzugsweise als Taschenfilter gemäß Figur 2 ausgebildet. Er umfasst dann in seinem Inneren eine Vielzahl von Filtertaschen 112, auf deren Oberfläche die Rußpartikel aus dem Abgas abgeschieden werden, wenn das Abgas während des Betriebs der Dieselkraftmaschine 200 durch die Filtertaschen 112 hindurchströmt. Die Oberflächen der Filtertaschen 112 sind vorzugsweise aus Sintermetall oder aus keramischem Werkstoff ausgebildet. Der Temperatursensor 120-1 ist erfindungsgemäß im Inneren eines Gehäuses des Rußpartikelfilters 110 angeordnet. Dort kann er entweder in der Umgebung der Taschen, in direktem Kontakt mit der Oberfläche der Taschen oder im Inneren der Taschen angeordnet sein.

Mit der Anordnung des ersten Temperatursensors 120-1 im Inneren des Rußpartikelfilters 110 ist es möglich, die Temperatur im Inneren des Rußpartikelfilters genauer zu erfassen als dies im Stand der Technik möglich ist. Mit Hilfe dieser genaueren Temperatur ist die Auswerteeinrichtung 130 in der Lage, aus der erfassten Temperatur abgeleitete physikalische Größen genauer zu berechnen. Bei diesen Größen handelt es sich insbesondere um die während eines Regenerationsbetriebs des Rußpartikelfilters verbrannte Rußmasse und die Geschwindigkeit, mit der diese Verbrennung erfolgt, das heißt die Abbrandrate. Außerdem kann mit Hilfe der genaueren Temperaturverhältnisse im Inneren des Rußpartikelfilters das Ende eines Regenerationsprozesses, das heißt der Zeitpunkt, wann in einem Rußpartikelfilter im Rahmen eines Regenerationsprozesses alle bisher angesammelte Rußmasse verbrannt ist, präziser berechnet werden. Zusätzlich wird die Korrelation zur Berechnung der Rußmasse aus dem Differenzdruck Δp aufgrund der exakteren Temperaturerfassung und dem daraus abgeleiteten tatsächlichen Volumenstrom verbessert. Der Drucksensor 121 liefert seine Signale an die Auswerteeinheit 130.

Neben dem Rußpartikelfilter 110 umfasst das Abgasreinigungssystem 100 typischerweise zusätzlich noch einen Diesel-Oxidationskatalysator 140, welcher mit dem Rußpartikelfilter 110 über ein Rohrstück 150 verbunden ist und dem Rußpartikelfilter 110 in der Strömungsrichtung des Abgases gesehen vorgeschaltet ist. Katalysator und Filter können auch direkt aneinander (in einer "Verpackung") verbaut sein, ohne Zwischenrohr (bei Peugeot-System). In Strömungsrichtung des Abgases kann vor dem Oxidationskatalysator 140 ein zweiter Temperatursensor 120-2 und hinter dem Oxidationskatalysator 140 ein dritter Temperatursensor 120-3 vorgesehen sein. Diese beiden Temperatursensoren dienen zum Erfassen der Temperatur des Abgases am Eingang und am Ausgang des Oxidationskatalysators. Der Differenzdrucksensor 121 dient zur Ermittlung des Beladungszustandes des Partikelfilters. Diese Art der Rußmassenermittlung erfolgt jedoch innerhalb gewisser Fehlergrenzen, so dass eine präzise Erfassung der Rußmasse im Filter nicht möglich ist. Dementsprechend sind auch Zustände des Filters möglich, in denen die korrelierte Rußmasse kleiner ist als die tatsächliche. Daher können während des Regenerationsbetriebs höhere Temperaturen im Filter auftreten als erwartet.

Grundsätzlich wird der Rußpartikelfilter 110 dann in einen Regenerationsbetriebszustand gefahren, wenn die Rußmasse, welche sich während eines vorangegangenen Betriebs der Dieselkraftmaschine 200 in dem Rußpartikelfilter 110 angesammelt hat, einen vorgegebenen Rußmassenschwellenwezt m_{Max} überschritten hat. Mit Hilfe der erfindungsgemäß präziser erfassten Temperatur im Inneren des Rußpartikelfilters 110 kann dieser Rußmassenschwellenwert nun vorteilhafterweise regelmäßig adaptiert werden, was zu einer Optimierung der Zeitintervalle zur Einleitung der erforderlichen Regenerationsbetriebszustände des Rußpartikelfilters führt.

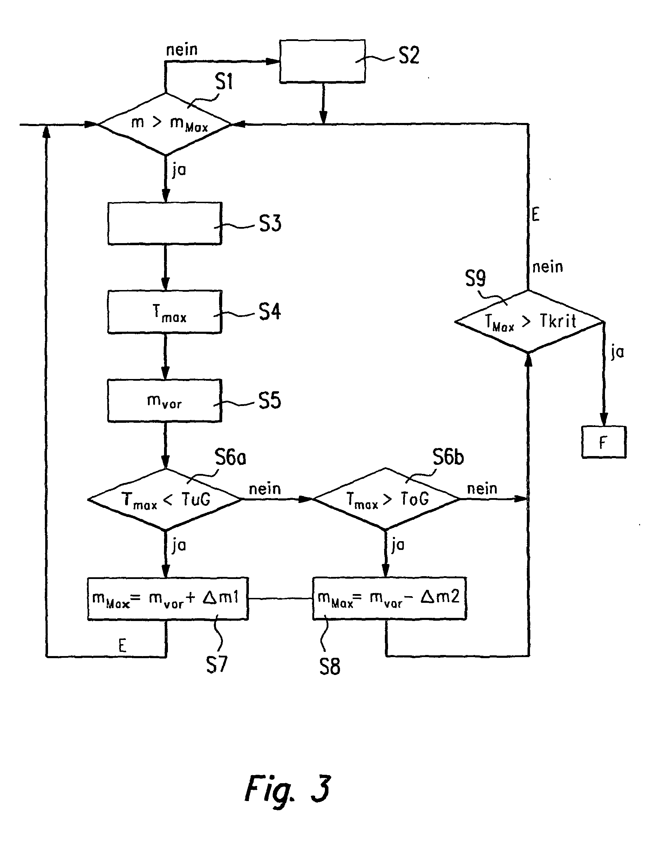

Die adaptive Optimierung des Zeitintervalls zur Einleitung eines jeweils erforderlichen Regenerierungsbetriebszustandes wird nachfolgend unter Bezugnahme auf Figur 3 näher beschrieben.

In Figur 3 ist zu erkennen, dass während des Betriebs der Dieselkraftmaschine 200 die sich in dem Rußpartikelfilter 110 ansammelnde Rußmasse m kontinuierlich überwacht wird; siehe Verfahrensschritt S1. Dies geschieht in der Weise, dass die Rußmasse m mit einem vorgegebenen maximalen Rußmassenschwellenwert m_{Max} verglichen wird. Solange diese Bedingung nicht erfüllt ist, wird der Rußpartikelfilter 110 weiter in seinem normalen Betriebszustand betrieben; siehe Verfahrensschritt S2. Sollte die angesammelte Rußmasse jedoch den Rußmassenschwellenwert m_{Max} überschritten haben, so wird der Rußpartikelfilter 110 gemäß Verfahrensschritt S3 in einen sogenannten Regenerierungsbetriebszustand gefahren. In diesem Regenerierungsbetriebszustand wird die Rußmasse, welche sich bis dahin in dem Rußpartikelfilter 110 angesammelt hat, durch Oxidation in Kohlendioxid vorzugsweise vollständig abgebaut. Diese exotherme Reaktion führt zu einer charakteristischen Anhebung der Temperatur im Inneren des Rußpartikelfilters 110. Die dabei auftretende Maximaltemperatur Tmax wird während eines vorangegangenen Regenerationsbetriebs des Rußpartikelfilters 110 erfasst und zur Durchführung des Verfahrens gemäß Figur 3 in Verfahrensschritt S4 bereitgestellt. In einem nachfolgenden Verfahrensschritt S5 wird dann aus der während des vorangegangenen Regenerationsbetriebs des Rußpartikelfilters erfassten Maximaltemperatur Tmax auf die während des vorangegangenen Regenerationsbetriebs insgesamt verbrannte Rußmasse mᵥₒᵣ zurückgeschlossen. Dieser Rückschluss ist aufgrund bekannter Zusammenhänge zwischen der Maximaltemperatur und der verbrannten Rußmasse möglich. In einem nachfolgenden Verfahrensschritt S6a wird dann die in Verfahrensschritt S4 ermittelte Maximaltemperatur Tmax mit einer vorgegebenen unteren Schwellentemperatur TuG verglichen. Wenn dort festgestellt wird, dass die während des vorangegangenen Regenerationsbetriebs ermittelte Maximaltemperatur kleiner als die untere Schwellentemperatur TuG ist, dann wird der bisher in Verfahrensschritt S1 verwendete Rußmassenschwellenwert m_{Max} für die Einleitung nachfolgender Regenerationsbetriebszustände neu definiert. Genauer gesagt wird er in diesem Fall in Verfahrensschritt S7 definiert als die Summe der in Verfahrensschritt S5 ermittelten Rußmasse mᵥₒᵣ, welche insgesamt während des vorangegangenen Regenerationsbetriebs verbrannt wurde und welche im Wesentlichen den bisher gültigen Rußmassenschwellenwert repräsentiert, zuzüglich eines vorgegebenen korrigierenden Massenwertes Δm1 (Anhebung des Schwellenwertes). Nach dieser Neudefinition des Rußmassenschwellenwertes wird die Überwachung der sich in dem Rußpartikelfilter 110 ansammelnden Rußmasse m gemäß Verfahrensschritt S1 fortgesetzt.

Anderenfalls, wenn in Verfahrensschritt S6a festgestellt wurde, dass die zuvor erfasste Maximaltemperatur Tmax größer als die untere Schwellentemperatur TuG ist, wird in Verfahrensschritt S6b geprüft, ob die Maximaltemperatur größer als eine obere Schwellentemperatur ToG ist. Wird diese Prüfung bejaht, so wird der bisher verwendete Rußmassenschwellenwert m_{Max} verringert, indem er auf einen Betrag festgesetzt wird, welcher sich aus der Differenz zwischen der in Verfahrensschritt S5 berechneten Masse mᵥₒᵣ abzüglich eines zweiten vorgegebenen Massenkorrekturwertes Δm2 ist (Absenkung des Schwellenwertes). Der erste und der zweite Massenkorrekturwert Δm1, Δm2 können auch identisch sein. Diese Neudefinition des Rußmassenschwellenwertes m_{Max} erfolgt in Verfahrensschritt S8.

Nach Abschluss des Verfahrensschrittes S8 verzweigt das Verfahren nach Verfahrensschritt S9, bei dem geprüft wird, ob die Maximaltemperatur eine vorgegebene kritische Temperatur Tkrit, welche größer als die obere Schwellentemperatur ist, überschreitet. Wenn dies der Fall sein sollte, erzeugt die Auswerteeinrichtung 130 ein Fehlersignal F, welches auf eine Gefährdung des Rußpartikelfilter 110 aufgrund einer bei der letzten Regeneration aufgetretenen zu großen Maximaltemperatur Tmax hindeutet. Sollte sich in Verfahrensschritt S9 jedoch zeigen, dass die ermittelte Maximaltemperatur nicht größer als die kritische Schwellentemperatur Tkrit ist, erzeugt die Auswerteeinrichtung 130 genau wie nach Abschluss des Verfahrensschrittes S7 ein Steuersignal E, welches die weitere Überwachung der sich in dem Rußpartikelfilter 110 ansammelnden Rußmasse m gemäß Verfahrensschritt S1 veranlasst.

Das beschriebene Verfahren wird vorzugsweise in Form eines Computerprogramms für eine Auswerteeinrichtung einer Abgasreinigungsvorrichtung realisiert. Das Computerprogramm kann gegebenenfalls zusammen mit weiteren Computerprogrammen auf einem computerlesbaren Datenträger abgespeichert sein. Bei dem Datenträger kann es sich um eine Diskette, eine Compact Disc, einen sogenannten Flash-Memory oder dergleichen handeln. Das auf dem Datenträger abgespeicherte Computerprogramm kann dann als Produkt an einen Kunden verkauft werden. Ebenso ist es jedoch möglich, dass das Computerprogramm, wiederum gegebenenfalls zusammen mit weiteren Computerprogrammen für die Abgasreinigungsvorrichtung, auch ohne die Zuhilfenahme eines Datenträgers, über ein elektronisches Kommunikationsnetzwerk als Produkt an einen Kunden übertragen und verkauft wird. Bei dem Kommunikationsnetzwerk kann es sich insbesondere um das Internet handeln.

## Patentansprüche

1. Abgasreinigungsvorrichtung (100) für Brennkraftmaschinen (200), umfassend:
- einen Rußpartikelfilter (110) zum Herausfiltern von Rußpartikeln aus dem Abgas der Brennkraftmaschine (200);
- mindestens einen Temperatursensor (120-1) zum Erfassen der Temperatur des Abgases, wobei der Temperatursensor (120-1) im Innern des Rußpartikelfilters (110) angeordnet ist zum Erfassen der Temperatur des Abgases im Innern des Rußpartikelfilters (110) ; und
- eine Auswerteeinrichtung (130) zum Auswerten der erfassten Temperatur, wobei die Auswerteeinrichtung (130) ausgebildet ist, während eines Betriebs der Brennkraftmaschine (200) den Rußpartikelfilter (110) in einen Regenerationsbetriebszustand zu versetzen zum Abbrennen der Rußmasse (m), welche sich während des vorangegangenen Betriebs der Brennkraftmaschine (200) in dem Rußpartikelfilter (110) angesammelt hat, nachdem die angesammelte Rußmasse (m) einen vorgegebenen Rußmassenschwellenwert (m_{Max}) überschritten hat, **dadurch gekennzeichnet, dass** die Auswerteeinrichtung (130) ausgebildet ist, aus einer von dem Temperatursensor (120-1) während eines vorangegangenen Regenerationsbetriebs des Rußpartikelfilters (110) im Innern des Rußpartikelfilters (110) erfassten Maximaltemperatur (Tmax) auf die während des vorangegangenen Regenerationsbetriebs verbrannte Rußmasse (mᵥₒᵣ) rückzuschließen.

2. Abgasreinigungsvorrichtung (100) nach Anspruch 1, **dadurch gekennzeichnet, dass** die Auswerteeinrichtung (130) ausgebildet ist, den vorgegebenen Rußmassenschwellenwert (m_{Max}) und damit die Häufigkeit mit welcher ein Regenerationsbetrieb des Rußpartikelfilters (110) zukünftig durchzuführen ist, zu verändern, wenn die während des vorangegangenen Regenerationsbetriebs im Innern des Rußpartikelfilters erfasste Maximaltemperatur (Tmax) kleiner als eine untere Schwellentemperatur (TuG) oder größer als eine obere Schwellentemperatur (ToG) ist.

3. Abgasreinigungsvorrichtung (100) nach Anspruch 1 oder 2, **dadurch gekennzeichnet, dass** die Auswerteeinrichtung (130) ausgebildet ist, eine Fehlermeldung (F) zu generieren, wenn die von dem Temperatursensor (120-1) während des vorangegangenen Regenerationsbetriebs im Innern des Rußpartikelfilters (110) erfasste Maximaltemperatur (Tmax) des Abgases eine vorgegebene kritische Schwellentemperatur (Tkrit) übersteigt.

4. Abgasreinigungsvorrichtung (100) nach Anspruch 3, **dadurch gekennzeichnet, dass** die vorgegebene kritische Schwellentemperatur (Tkrit) über der oberen Schwellentemperatur (TuG) liegt.

5. Abgasreinigungsvorrichtung (100) nach einem der Ansprüche 1 bis 4, **dadurch gekennzeichnet, dass** der Rußpartikelfilter (110) als Taschenfilter ausgebildet ist und in seinem Innern eine Vielzahl von Filtertaschen (112) aufweist, auf deren Oberfläche die Rußpartikel abgeschieden werden, wenn das Abgas während eines Betriebs der Brennkraftmaschine (200) durch die Filtertaschen (112) hindurchströmt.

6. Abgasreinigungsvorrichtung (100) nach Anspruch 5, **dadurch gekennzeichnet, dass** die Oberflächen der Taschen (112) aus Sintermetall oder aus Keramik ausgebildet sind.

7. Abgasreinigungsvorrichtung (100) nach Anspruch 5 oder 6, **dadurch gekennzeichnet, dass** der Temperatursensor (120-1) in der Umgebung der Taschen (112), in Kontakt mit der Oberfläche der Taschen (112) oder im Innern der Taschen (112) angeordnet ist.

8. Abgasreinigungsvorrichtung (100) nach einem der vorangegangenen Ansprüche, **dadurch gekennzeichnet, dass** die Abgasreinigungsvorrichtung (100) aufweist:
- einen Oxidationskatalysator (140), welcher mit dem Rußpartikelfilter (110) gegebenenfalls über ein Rohrstück (150) verbunden ist und dem Rußpartikelfilter (110) in der Strömungsrichtung des Abgases gesehen vorgeschaltet ist;
- einen zweiten Temperatursensor (120-2), der vor dem Oxidationskatalysator (140) angeordnet ist, zum Erfassen der Temperatur des Abgases am Eingang des Oxidationskatalysators (140);
- einen dritten Temperatursensor (120-3), der zwischen dem Oxidationskatalysator (140) und dem Rußpartikelfilter (110) angeordnet ist, zum Erfassen der Temperatur des Abgases am Ausgang des Oxidationskatalysators (140); und/oder
- einen Drucksensor (121) zum Erfassen des Differenzdruckes über dem Rußpartikelfilter (110) zur Bestimmung des Beladungszustandes des Rußpartikelfilters (110).

9. Verfahren zum Betreiben einer Abgasreinigungsvorrichtung (100) für Brennkraftmaschinen (200), umfassend einen Rußpartikelfilter (110) zum Herausfiltern von Rußpartikeln aus dem Abgas der Brennkraftmaschine (200), wobei die Temperatur des Abgases im Innern des Rußpartikelfilters (110) erfasst wird, und wobei der Rußpartikelfilter (110) während eines Betriebs der Brennkraftmaschine (200) in einen Regenerationsbetriebszustand versetzt wird, um die Rußmasse (m) abzubrennen, welche sich während des vorangegangenen Betriebs der Brennkraftmaschine (200) in dem Rußpartikelfilter (110) angesammelt hat, nachdem die angesammelte Rußmasse (m) einen vorgegebenen Rußmassenschwellenwert (mₘₐₓ) überschritten hat, **dadurch gekennzeichnet, dass** aus einer während eines vorangegangenen Regenerationsbetriebs des Rußpartikelfilters (110) im Innern des Rußpartikelfilters (110) erfassten Maximaltemperatur (Tmax) auf die während des vorangegangenen Regenerationsbetriebs verbrannte Rußmasse (mᵥₒᵣ) rückgeschlossen wird.

10. Verfahren nach Anspruch 9, **dadurch gekennzeichnet, dass** nach einem vorangegangenen Regenerationsbetrieb folgende Schritte ausgeführt werden, um den Rußmassenschwellenwert (m_{Max}) und damit die Häufigkeit zur Einleitung eines zukünftigen Regenerationsbetriebszustandes für den Rußpartikelfilter (110) eventuell neu festzulegen:
- Bereitstellen der während des vorangegangenen Regenerationsbetriebs aufgetretenen Maximaltemperatur (Tmax);
- Vergleichen dieser erfassten Maximaltemperatur (Tmax) mit einer unteren und einer oberen Schwellentemperatur (TuG, ToG);
- Vergrößern des Rußmassenschwellenwertes (mₘₐₓ) um einen ersten vorgegebenen Korrekturmassenwert (Δm1), wenn die erfasste Maximaltemperatur (Tmax) die vorgegebene untere Schwellentemperatur (TuG) unterschreitet; oder
- Verkleinern des Rußmassenschwellenwertes (m_{Max}) um einen zweiten vorgegebenen Korrekturmassenwert (Δm2), wenn die erfasste Maximaltemperatur (Tmax) die vorgegebene obere Schwellentemperatur (ToG) überschreitet.

11. Verfahren nach Anspruch 9 oder 10, **gekennzeichnet durch** die Ausgabe einer Fehlermeldung (F), wenn die während des vorangegangenen Regenerationsbetriebs erfasste Maximaltemperatur (Tmax) eine vorgegebene kritische Schwellentemperatur (Tkrit), welche vorzugsweise höher liegt als die obere Schwellentemperatur (ToG), überschreitet.

12. Computerprogramm mit Programmcode für eine Abgasreinigungsvorrichtung (100), **dadurch gekennzeichnet, dass** der Programmcode ausgebildet ist zur Durchführung des Verfahrens nach einem der Ansprüche 9 - 11.

## Claims

1. Exhaust-gas purification apparatus (100) for internal combustion engines (200), comprising:
- a soot particle filter (110) for filtering soot particles out of the exhaust gas of the internal combustion engine (200);
- at least one temperature sensor (120-1) for sensing the temperature of the exhaust gas, the temperature sensor (120-1) being arranged in the interior of the soot particle filter (110) in order to sense the temperature of the exhaust gas in the interior of the soot particle filter (110); and
- an evaluation device (130) for evaluating the sensed temperature, the evaluation device (130) being configured so as to switch the soot particle filter (110) into a regeneration operating state during operation of the internal combustion engine (200), in order to burn off the soot mass (m) which has collected in the soot particle filter (110) during the preceding operation of the internal combustion engine (200), after the collected soot mass (m) has exceeded a predefined soot mass threshold value (mₘₐₓ), **characterized in that** the evaluation device (130) is configured so as to derive information about the soot mass (mᵥₒᵣ) which is burned during the preceding regeneration operation from the maximum temperature (Tmax) which is sensed in the interior of the soot particle filter (110) by the temperature sensor (120-1) during a preceding regeneration operation of the soot particle filter (110).

2. Exhaust-gas purification apparatus (100) according to Claim 1, **characterized in that** the evaluation device (130) is configured so as to change the predefined soot mass threshold value (mₘₐₓ) and therefore the frequency, with which a regeneration operation of the soot particle filter (110) is to be carried out in future, if the maximum temperature (Tmax) which is sensed in the interior of the soot particle filter during the preceding regeneration operation is lower than a lower threshold temperature (TuG) or higher than an upper threshold temperature (ToG).

3. Exhaust-gas purification apparatus (100) according to Claim 1 or 2, **characterized in that** the evaluation device (130) is configured so as to generate a fault message (F) if the maximum temperature (Tmax) of the exhaust gas which is sensed in the interior of the soot particle filter (110) by the temperature sensor (120-1) during the preceding regeneration operation exceeds a predefined critical threshold temperature (Tkrit).

4. Exhaust-gas purification apparatus (100) according to Claim 3, **characterized in that** the predefined critical threshold temperature (Tkrit) lies above the upper threshold temperature (TuG).

5. Exhaust-gas purification apparatus (100) according to one of Claims 1 to 4, **characterized in that** the soot particle filter (110) is configured as a pocket filter and has a multiplicity of filter pockets (112) in its interior, the soot particles being deposited on the surface of the said filter pockets (112) when the exhaust gas flows through the filter pockets (112) during operation of the internal combustion engine (200).

6. Exhaust-gas purification apparatus (100) according to Claim 5, **characterized in that** the surfaces of the pockets (112) are formed from sintered metal or from ceramic.

7. Exhaust-gas purification apparatus (100) according to Claim 5 or 6, **characterized in that** the temperature sensor (120-1) is arranged in the surroundings of the pockets (112), in contact with the surface of the pockets (112) or in the interior of the pockets (112).

8. Exhaust-gas purification apparatus (100) according to one of the preceding claims, **characterized in that** the exhaust-gas purification apparatus (100) has the following:
- an oxidation catalytic converter (140) which is connected to the soot particle filter (110) optionally via a tubular piece (150) and is connected ahead of the soot particle filter (110) as viewed in the flow direction of the exhaust gas;
- a second temperature sensor (120-2) which is arranged ahead of the oxidation catalytic converter (140), for sensing the temperature of the exhaust gas at the inlet of the oxidation catalytic converter (140);
- a third temperature sensor (120-3) which is arranged between the oxidation catalytic converter (140) and the soot particle filter (110), for sensing the temperature of the exhaust gas at the outlet of the oxidation catalytic converter (140); and/or
- a pressure sensor (121) for sensing the differential pressure across the soot particle filter (110), in order to determine the loading state of the soot particle filter (110).

9. Method for operating an exhaust-gas purification apparatus (100) for internal combustion engines (200), comprising a soot particle filter (110) for filtering soot particles out of the exhaust gas of the internal combustion engine (200), the temperature of the exhaust gas being sensed in the interior of the soot particle filter (110), and the soot particle filter (110) being switched into a regeneration operating state during operation of the internal combustion engine (200), in order to burn off the soot mass (m) which has collected in the soot particle filter (110) during the preceding operation of the internal combustion engine (200), after the collected soot mass (m) has exceeded a predefined soot mass threshold value (mₘₐₓ), **characterized in that** information about the soot mass (mᵥₒᵣ) which is burned during the preceding regeneration operation is derived from the maximum temperature (Tmax) which is sensed in the interior of the soot particle filter (110) during a preceding regeneration operation of the soot particle filter (110).

10. Method according to Claim 9, **characterized in that** the following steps are carried out after a preceding regeneration operation, in order possibly to fix the soot mass threshold value (mₘₐₓ) and therefore the frequency for initiating a future regeneration operating state for the soot particle filter (110) again:
- provision of the maximum temperature (Tmax) which occurred during the preceding regeneration operation;
- comparison of this sensed maximum temperature (Tmax) with a lower and an upper threshold temperature (TuG, ToG);
- increasing the soot mass threshold value (mₘₐₓ) by a first predefined correction mass value (Δm1) if the sensed maximum temperature (Tmax) undershoots the predefined lower threshold temperature (TuG); or
- reducing the soot mass threshold value (mₘₐₓ) by a second predefined correction mass value (Δm2) if the sensed maximum temperature (Tmax) exceeds the predefined upper threshold temperature (ToG).

11. Method according to Claim 9 or 10, **characterized by** the output of a fault message (F) if the maximum temperature (Tmax) which is sensed during the preceding regeneration operation exceeds a predefined critical threshold temperature (Tkrit) which preferably lies higher than the upper threshold temperature (ToG).

12. Computer program having program code for an exhaust-gas purification apparatus (100), **characterized in that** the program code is configured so as to carry out the method according to one of Claims 9 to 11.

## Revendications

1. Dispositif d'épuration des gaz d'échappement (100) pour moteurs à combustion interne (200), comprenant :
- un filtre à particules de suie (110) pour filtrer les particules de suie des gaz d'échappement du moteur à combustion interne (200) ;
- au moins un capteur de température (120-1) pour enregistrer la température des gaz d'échappement, le capteur de température (120-1) étant disposé à l'intérieur du filtre à particules de suie (110) pour enregistrer la température des gaz d'échappement à l'intérieur du filtre à particules de suie (110) ; et
- un dispositif d'exploitation (130) pour exploiter la température enregistrée, le dispositif d'exploitation (130) étant conçu pour amener le filtre à particules de suie (110) dans un état de fonctionnement de régénération pendant un fonctionnement du moteur à combustion interne (200), afin de brûler la masse de suie (m) qui s'est accumulée pendant le fonctionnement précédent du moteur à combustion interne (200) dans le filtre à particules de suie (110), lorsque la masse de suie accumulée (m) a dépassé une valeur de seuil de la masse de suie prédéterminée (mₘₐₓ),
**caractérisé en ce que**
le dispositif d'exploitation (130) est configuré pour déduire la masse de suie (mᵥₒᵣ) brûlée pendant le mode de régénération précédent à partir d'une température maximale (Tmax) enregistrée par le capteur de température (120-1) pendant un mode de régénération précédent du filtre à particules de suie (110) à l'intérieur du filtre à particules de suie (110).

2. Dispositif d'épuration des gaz d'échappement (100) selon la revendication 1,
**caractérisé en ce que**
le dispositif d'exploitation (130) est configuré de manière à modifier la valeur de seuil de la masse de suie prédéterminée (mₘₐₓ) et ainsi la fréquence à laquelle un mode de régénération du filtre à particules de suie (110) doit être exécuté à l'avenir, lorsque la température maximale (Tmax) enregistrée à l'intérieur du filtre à particules de suie pendant le mode de régénération précédent est inférieure à une température de seuil inférieure (TuG) ou supérieure à une température de seuil supérieure (ToG).

3. Dispositif d'épuration des gaz d'échappement (100) selon la revendication 1 ou 2,
**caractérisé en ce que**
le dispositif d'exploitation (130) est prévu pour générer un message d'erreur (F) lorsque la température maximale (Tmax) des gaz d'échappement, enregistrée à l'intérieur du filtre à particules de suie (110) par le capteur de température (120-1) pendant le mode de régénération précédent, dépasse une température de seuil critique prédéterminée (Tkrit).

4. Dispositif d'épuration des gaz d'échappement (100) selon la revendication 3,
**caractérisé en ce que**
la température de seuil critique prédéterminée (Tkrit) est supérieure à la température de seuil supérieure (TuG).

5. Dispositif d'épuration des gaz d'échappement (100) selon l'une des revendications 1 à 4,
**caractérisé en ce que**
le filtre à particules de suie (110) est configuré sous forme de filtre à poches et présente à l'intérieur plusieurs poches filtrantes (112), à la surface desquelles se déposent les particules de suie lorsque les gaz d'échappement traversent les poches filtrantes (112) pendant le fonctionnement du moteur à combustion interne (200).

6. Dispositif d'épuration des gaz d'échappement (100) selon la revendication 5,
**caractérisé en ce que**
les surfaces des poches (112) sont en métal fritté ou en céramique.

7. Dispositif d'épuration des gaz d'échappement (100) selon la revendication 5 ou 6,
**caractérisé en ce que**
le capteur de température (120-1) est disposé au voisinage des poches (112), en contact avec la surface des poches (112), ou à l'intérieur des poches (112).

8. Dispositif d'épuration des gaz d'échappement (100) selon l'une des revendications précédentes,
**caractérisé en ce que**
le dispositif d'épuration des gaz d'échappement (100) présente :
- un catalyseur d'oxydation (140) relié au filtre à particules de suie (110), le cas échéant via une section de tube (150), et connecté en amont du filtre à particules de suie (110) dans la direction d'écoulement des gaz d'échappement ;
- un deuxième capteur de température (120-2) disposé avant le catalyseur d'oxydation (140) pour enregistrer la température des gaz d'échappement à l'entrée du catalyseur d'oxydation (140) ;
- un troisième capteur de température (120-3) disposé entre le catalyseur d'oxydation (140) et le filtre à particules de suie (110), pour enregistrer la température des gaz d'échappement à la sortie du catalyseur d'oxydation (140) ; et/ou
- un capteur de pression (121) pour enregistrer la pression différentielle via le filtre à particules de suie (110) afin de déterminer l'état de charge du filtre à particules de suie (110).

9. Procédé de fonctionnement d'un dispositif d'épuration des gaz d'échappement (100) pour moteurs à combustion interne (200), comprenant un filtre à particules de suie (110) pour filtrer des particules de suie des gaz d'échappement du moteur à combustion interne (200), la température des gaz d'échappement à l'intérieur du filtre à particules de suie (110) étant enregistrée, et le filtre à particules de suie (110) étant amené dans un état de fonctionnement de régénération pendant le fonctionnement du moteur à combustion interne (200) afin de brûler la masse de suie (m) accumulée dans le filtre à particules de suie (110) pendant le fonctionnement précédent du moteur à combustion interne (200), lorsque la masse de suie accumulée (m) a dépassé une valeur de seuil de la masse de suie prédéterminée (mₘₐₓ),
**caractérisé en ce qu'**
à partir d'une température maximale (Tmax) enregistrée à l'intérieur du filtre à particules de suie (110) pendant un mode de régénération précédent du filtre à particules de suie (110), on déduit la masse de suie (mᵥₒᵣ) brûlée pendant le mode de régénération précédent.

10. Procédé selon la revendication 9,
**caractérisé en ce qu'**
après un mode de régénération précédent, on exécute les étapes suivantes, afin éventuellement de déterminer à nouveau la valeur de seuil de la masse de suie (mₘₐₓ) et ainsi la fréquence de lancement d'un état de fonctionnement de régénération futur pour le filtre à particules de suie (110) :
- détermination de la température maximale (Tmax) apparue pendant le mode de régénération précédent ;
- comparaison de cette température maximale enregistrée (Tmax) avec une température de seuil inférieure et supérieure (TuG, ToG) ;
- augmentation de la valeur de seuil de la masse de suie (mₘₐₓ) d'une première valeur de masse de correction prédéterminée (Δm1) lorsque la température maximale enregistrée (Tmax) est inférieure à la température de seuil inférieure prédéterminée (TuG) ; ou
- diminution de la valeur de seuil de la masse de suie (mₘₐₓ) d'une deuxième valeur de masse de correction prédéterminée (Δm2) lorsque la température maximale enregistrée (Tmax) dépasse la température de seuil supérieure prédéterminée (ToG).

11. Procédé selon la revendication 9 ou 10,
**caractérisé par**
l'émission d'un message d'erreur (F) lorsque la température maximale (Tmax) enregistrée pendant le mode de régénération précédent dépasse une température de seuil critique prédéterminée (Tkrit) de préférence supérieure à la température de seuil supérieure (ToG).

12. Programme informatique avec code de programme pour un dispositif d'épuration des gaz d'échappement (100),
**caractérisé en ce que**
le code de programme est configuré pour exécuter le procédé selon l'une des revendications 9 à 11.
